Europäisches Patentamt

European Patent Office

Office européen des brevets

(11) Publication number: **0 097 395**
**B1**

# EUROPEAN PATENT SPECIFICATION

(45) Date of publication of patent specification: **07.01.87**

(21) Application number: **83200848.6**

(22) Date of filing: **08.06.83**

(51) Int. Cl.⁴: **A 01 J 7/00**

(54) **Apparatus for removing a milking set of a milking machine, particularly for a cow-shed.**

(30) Priority: **17.06.82 NL 8202453**

(43) Date of publication of application:
**04.01.84 Bulletin 84/01**

(45) Publication of the grant of the patent:
**07.01.87 Bulletin 87/02**

(84) Designated Contracting States:
**DE FR GB NL**

(56) References cited:
**EP-A-0 001 667**
**DE-A-2 120 020**
**FR-A-2 345 071**
**GB-A-1 488 251**
**NL-A-7 708 620**
**US-A-2 641 223**
**US-A-4 263 874**

(73) Proprietor: **Kummer Electronics B.V.**
**Oostergrachtswal 91-95**
**NL-8921 AB Leeuwarden (NL)**

(72) Inventor: **Kummer, Jan**
**Oostergrachtswal 91-95**
**NL-8921 AB Leeuwarden (NL)**

(74) Representative: **den Boer, Jan Johannes, Ir.**
**et al**
**Octrooibureau Polak & Charlouis Laan Copes**
**van Cattenburch 80**
**NL-2585 GD The Hague (NL)**

Courier Press, Leamington Spa, England.

## Description

The invention relates to an apparatus for removing a milking set from a cow and connectable with different positions of a milk conduit and a main vacuum conduit of a milking machine in a cow-shed, said apparatus comprising a substantially vertically suspended cylinder with piston, the milking set being connected to the upper side of the piston through a lifting cord, the space in the cylinder below the piston being connectable through a vacuum supply conduit of the apparatus to the main vacuum conduit through a vacuum valve which is actuatable by an electronic control device received in a closed cylinder portion, the lifting chord leaving the upper end of the cylinder and further extending downwardly along a guide element.

Such removing apparatus is known from DE—A—2120020. This known apparatus is not transportable between the different cow positions in a shed.

According to NL—A—7708620 apparatus is known, which has been previously used by applicants, in which a cantilever arm is pivotably supported from a vertically suspended lifting cylinder. The arm is pivotable between a horizontal and a vertical position. The lifting cord is connected to the under side of the piston and leaves the cylinder at half its height. The arm supports the milking set lifting cord in horizontal position for miling and is pivoted to the vertical position when the milking of the particular cow has been terminated.

In order to avoid contact between the milking set and the shed ground, the milking set, when removed, should be moved upwardly more directly and along a steeper path.

It would in itself be possible to turn the cylinder of the known removing apparatus upside down for achieving the same effect. However, then the electronic control device is at the lower end and the vacuum supply conduit and the electric wires are to be guided upwardly on the cylinder exterior towards the electric supply, which is adjacent to the milk and vacuum conduits. In that case the wires are easily mechanically damaged and/or corroded by the shed atmosphere or cleaning liquids so that electric short-circuiting could occur. Moreover, the electric control device would be exposed to swinging movements of larger amplitude and to shocks, likewise with the possibility of damage.

According to the invention the vacuum supply conduit extends within the cylinder from the top to adjacent the bottom of the cylinder and is connected past the upper space into communication with the space below the piston.

US—A—2,641,223 reveals also a removing apparatus for a milking set comprising a lifting cylinder having a lifting cord connected to the upper side of its cylinder, which leaves the upper cylinder end and extends further downwardly along a guiding element to the milking set, a vacuum space being provided below the piston.

However, this lifting cylinder is secured into a fixed milk reservoir and also cannot be transported as a self-contained unit between the cow positions in a shed.

In a preferred embodiment of the apparatus according to the invention a vacuum tube extends from the top of the cylinder sealingly through the piston to adjacent the bottom of the cylinder space below the piston.

It is also possible to construct the apparatus such that a vacuum supply conduit extends within the cylinder as a resilient spiralized tube, the lower end of which is secured to the piston where it communicates with the cylinder space below the piston through an aperture in the piston bottom. However, in that case, the vacuum has to impart a somewhat larger force due to the elasticity of the spiralized tube, which tends to move the piston upwardly.

A further possible embodiment is that in which the top of the cylinder has a vacuum space around an inner sleeve provided in the cylinder, said sleeve communicating with the cylinder space below the piston through an aperture in said inner sleeve adjacent the bottom of said cylinder space.

Finally the embodiment may be such that the closed cylinder portion having the electronic control device and the vacuum valve is situated below the bottom of the cylinder space situated below the piston. Thereby one has the above-mentioned disadvantages, which possibly may be removed by providing around the electrical wires extending outside the cylinder a further enclosing outer sleeve, or by extending the wires through the vacuum tube.

At the upper end of the removing apparatus, parts have been provided for connecting it with the stationary milk and vacuum conduits and with the milk and vacuum hose respectively extending to the milking set. Simultaneously there the pulsator for controlling the milking machine and the milk flow indicator have been provided, which indicator stops the milking operation when the milk flow issued by the cow becomes in average less than substantially 0.16 kg/per minute.

Preferably the cylinder of the apparatus is suspended by means of a hock or bracket secured thereto from the lower conduit which usually is the vacuum conduit. The communication with the conduits may be performed through valves and an electric plug. However, the communication may be obtained more easily by a connection handgrip (commercially known as Twingrip) which is connected to the upper end of the cylinder and carries connecting means for communicating with the milk conduit and with the vacuum conduit and has electrical connections such that a milk passage extends through the interior of the handgrip, the milk hose of the milking set being connectable to the end of said passage. When connecting the handgrip with the conduits, thereby automatically all communications are established. This results in a more compact and lighter assembly when the milk flow indicator is a piece which is sealingly received in a corresponding aperture in the handgrip, which opens into the milk passage, the milk indicator comprising two electrodes projecting into the milk passage, said electrodes being electrically connected at the exterior of the piece to the electronic control device in the cylinder of the apparatus.

The invention will be further explained below with reference to the drawing showing some embodiments, given as examples, of the removing apparatus according to the invention.

Figure 1 shows part of a cow shed with cow, a milking set being connected by means of the removing apparatus according to the invention.

Figures 2 to 5 show schematically different embodiments of the cylinder of the removing apparatus.

Figure 6 shows a special integrated milk flow indicator, used with the removing apparatus.

Fig. 7 shows a different type of milk flow indicator.

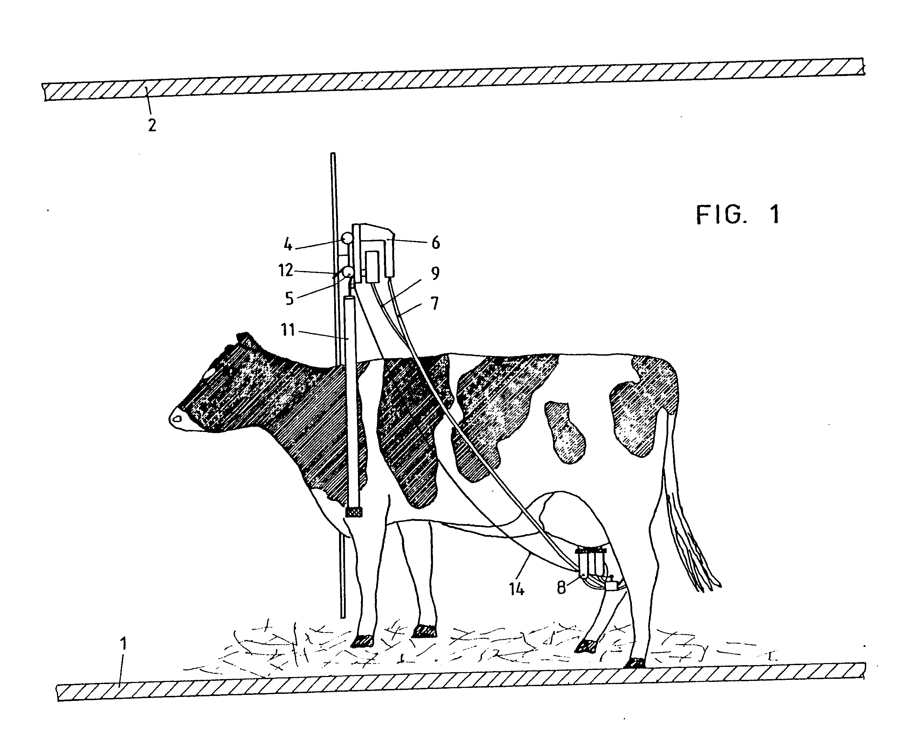

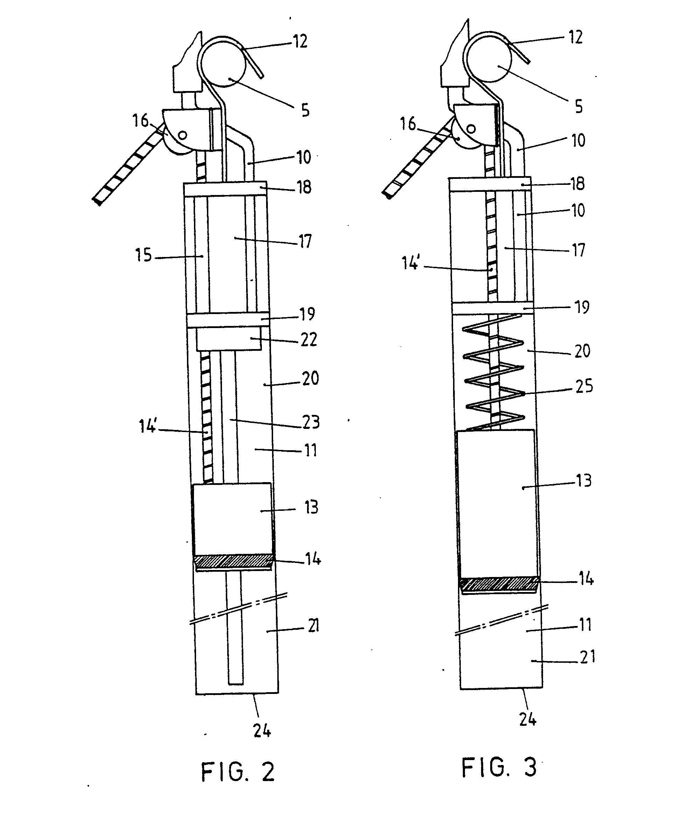

Figure 1 shows a part of a cow-shed in which vertical parts or carrying beams 3 are provided between the floor 1 and the roof 2 thereof. A milk conduit 4 and a vacuum conduit 5 are secured to said posts in substantially horizontal position. Between the stations for two cows a handgrip 6 known per se may be connected to said conduits, said handgrip 6 permitting e.g. placing it by a snap connection against apertures at this position in the conduits 4 and 5. Thereby the milk conduit 4 is connected to a milk hose 7 of which one end is connected to the handgrip 6 and the other end to the milking set 8, and a vacuum hose 9 is connected to the vacuum conduit 5 and the milking set 8. The electrical connection is made by means of the plugs 45. Further a resilient vacuum tube 10 communicates with the vacuum passage in the handgrip (Figure 2), the other end of said tube being connected to a lifting cylinder 11 of the removing apparatus. Said cylinder is suspended through a bracket 12 to, in the case as shown, the vacuum conduit 5. In the preferred embodiment of the lifting cylinder according to Figure 2, this comprises a piston 19 carrying a sealing sleeve 14, whereby the cylinder may be sealingly moved up and down in the cylinder 11. Also, the vacuum tube 10 extends through a sealing means (not shown) through the piston. A lifting chord 14' is connected to the upper end of the piston 13, said chord extending upwardly through a lifting chord guide 15, leaves the cylinder 11 at its upper end, thereafter is guided along a pulley 16 and further downwardly to the milking set 8. At the upper end of the cylinder 11 a space 17 is provided, in which the electronic control device and a vacuum valve (both not shown) are received. Said space 17 is present between the upper cover 18 of the cylinder and a partition 19. The lifting chord guide 15 is provided between the walls 18 and 19 and prevents contact between the lifting chord and the electronic elements in the space 17.

The remainder of the cylinder 11 below the space 17 is divided by the piston 13 into a space 20 above the piston and a space 21 below the piston. The vacuum tube 10 extends through the space 17 to a chamber 22 situated below the partition 19. From said chamber 22 a further portion 23 of the vacuum tube extends centrally through the cylinder 11, said portion extending with a clearance through the piston 13 and through the sealing sleeve 14 to close to the bottom 14 of the lifting cylinder.

When the handgrip 6 is connected to the conduits 4 and 5 and the electric connection is made, whereby the milking set 8 is connected to the teats of the cow, the milking operation is started and the milk is carried by the milk hose 7 to the milk conduit 4. The vacuum valve in the space 17 is in such position that atmospheric pressure prevails in the space 20 above as well as in the space 21 below the piston. If the milk flow indicator, provided in the apparatus, indicates that the milk production of the cow ends, this indicator issues a signal to the electronic control device, whereby the vacuum valve is switched and vacuum is admitted to the space 21 below the piston. Thereby the piston moves downwardly and the lifting chord 14 is pulled into the cylinder and therewith the milking set 8, connected to said chord, is pulled upwardly, which is possible in that simultaneously with the said signal also the vacuum in the milking set is cancelled, so that said set drops from the udder. In that now, contrary to the known removing apparatus, the lifting chord extends towards the upper end of the lifting cylinder 11 and not towards the lower end thereof, the milking set moves almost directly from the udder upwardly so that there is no danger that it sweeps the ground.

Figure 3 shows a different embodiment in which like or corresponding parts to those in Figure 2 are indicated by the same reference numbers. Also here the apparatus has the lifting cylinder 11 with piston 13 and lifting chord 14. The central vacuum tube 23 according to Figure 2 is here substituted by a spiralized elastic conduit 25, the upper end of which is sealingly connected through the partition 19 to the lower end of the vacuum tube 10. The lower end of the vacuum conduit 25 is connected through the piston 13 with the space 21 below the piston. Also here the lifting chord 14 is retracted when a vacuum is produced in the space 21 below the piston.

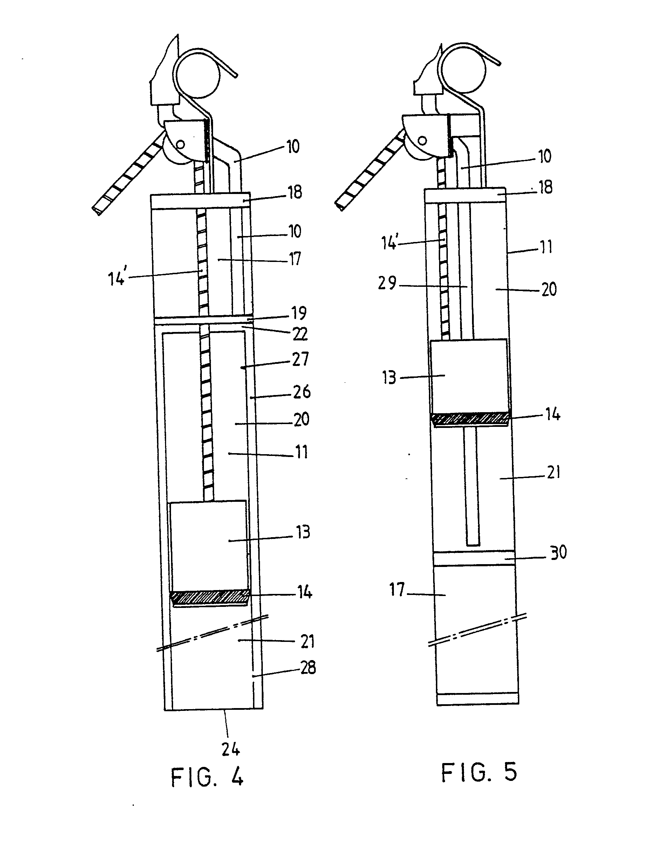

In the embodiment according to Figure 4, the vacuum connection between the vacuum tube 10 in the space 17 and the space 21 below the piston 13 is obtained in that the lower end of the tube 10 in the space 17 is connected through the partition 19 with a chamber 22 below the partition. Said chamber 22 communicates with a hollow tubular vacuum space 26, constituted by an inner wall 27 extending from the bottom of the chamber 22 parallel to the wall of the cylinder 11 to the bottom 24 of the cylinder. Adjacent to said bottom an aperture 28 is provided in said inner wall 27.

Finally a possible although not preferred embodiment is shown in Figure 5. Therein the space 17 for the electronic parts and the valve are provided in the lowest portion of the lifting cylinder 11. Thereover the space 21 below the piston 13 and the space 20 above the piston have been provided. The vacuum tube 29 here extends from the connection through the upper wall 18 with the resilient part 10 on top of the cylinder, in substantially the same manner as according to Figure 2, through the piston 13 to close to a partition wall 30 separating the space 21 from the space 17. The electric supply may be provided through the vacuum tube.

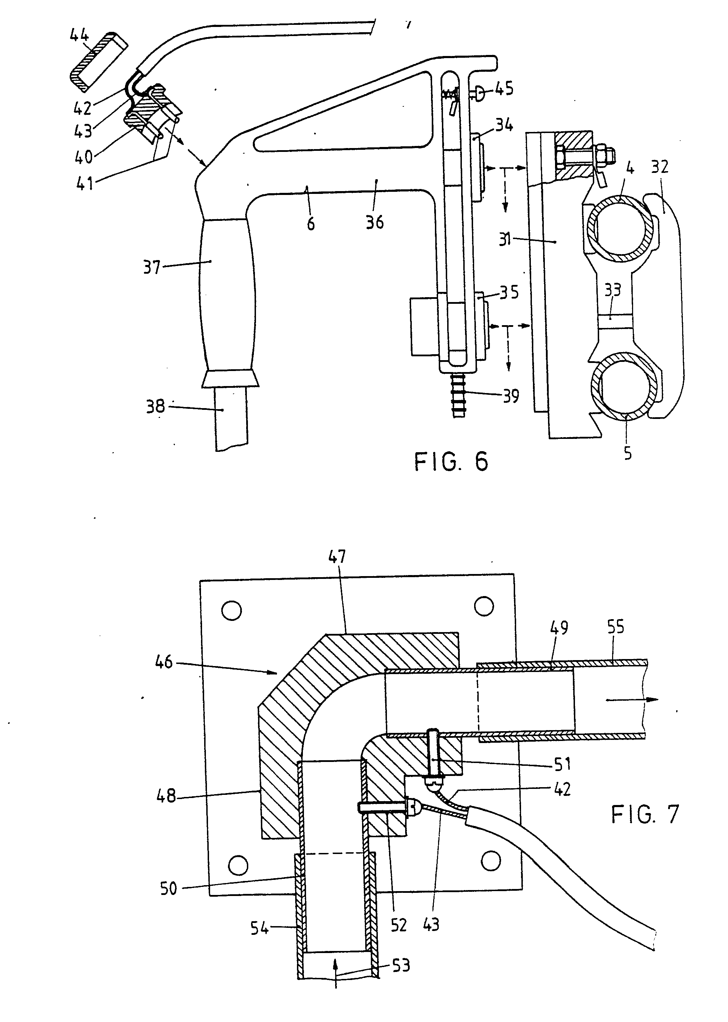

In Figure 6 the movable handgrip 6 of the removing apparatus has been shown on a larger scale. To said handgrip belongs a housing 31, which may be clamped through a check 32 and fasteners, such as 33 to the milk conduit 4 and the vacuum conduit 5. Said housing 31 is hollow and comprises a slide (not shown) which is moved downwardly by connected flanges 34 and 35 to the handgrip 6 when the handgrip is connected to said housing.

Thereby a continuous communication is obtained between the milk conduit 4 and the flange 34 and also between the vacuum conduit 5 and the flange 35. If the removing apparatus, connected to the handgrip 6, is removed from the housing 31, this occurs such that the slide (not shown) is displaced and thereby closes the apertures in the conduits 5 and 6. A passage (not shown) is provided in the flange 34 and extends into the upper leg 36 of the handgrip and further in the grip portion 37 of the handgrip to a spout 38 to which the milk hose 7 will be connected. Likewise a passage is provided in the flange 35, which communicates with a spout 39 to which the vacuum hose 9 may be connected.

In the parts 36, 37, 38 of the milk passage and in the present case in the bight between the parts 36 and 37 an aperture (not shown) is provided in the exterior wall of the handgrip, in which aperture a plug 40 may be placed. Preferably the handgrip and the plug are manufactured from plastic material such that the plug 40 seals the aperture when introduced into the handgrip. The plug 40 carries two electrodes which extend into the aperture in the milk passage, when the plug is inserted. The electrodes 41 are connected through electric wires 42, 43 to the electronic control device in the space 17 of the lifting cylinder. The operation is such that a signal is issued in the control device when the average milk flow through the milk passage decreases below a flow quantity of about 0.16 Kg/per minute. The connection between the electrodes 41 and the wires 42, 43 may be covered with the cap 44 as shown. Thereby a very compact milk flow indicator has been obtained. Of course also a known milkflow indicator may be provided on the removing apparatus.

According to the invention also a milkflow indicator may be applied, which is further improved relative to that shown in Figure 6. Said improved indicator is schematically shown in Figure 7 and may also be used independently of the handgrip according to Figure 6.

In the milkflow indicator according to Figure 7 a tubular piece 46, bent at right angles, e.g. manufactured from plastic material, has interiorly in each of the legs 47, 48 a conductive metal tube 49, 50. A contact screw 51, 52 is secured to each tube and extends through the tubular piece outwardly and there may be connected to electric wires such as 42, 43 according to Figure 6. If the milk flows as a pulsating flow from the milking set according to the arrow 53 through the indicator through hoses 54, 55 connected therewith, then a predetermined electrical resistance value may be measured between the two metal tubes 49, 50. Dependant on the fact whether the milk pulses are more or less concentrated the relative resistance will be lower or higher respectively. From this data and the time interval during which a milk pulse passes through the indicator the electronic control device computes the correct moment in time in which the milking set must be removed. Due to the fact that the supply tube 50 and the discharge tube 49 have a relative angled position one achieves that the milk, which is sucked upwardly in the vertical supply portion, is directly discharged after it has reached the horizontal portion. For it is that the milk present in the vertical supply portion with the hose 54 connected therewith moves somewhat backwardly or downwardly after each pulse.

Should the discharge portion be positioned in the same direction as the supply portion, therefore also vertical, the milk quantity, that has been measured already, would repeatedly activate the measuring contacts 51, 52 so that measurement would become inaccurate.

It is to be noted that the provision of such metal tubes having contacts in a milk conduit is known per se. However, in the known construction they are spaced in a straight piece of milk conduit which is arranged horizontally or substantially horizontally. Thereby one does not obtain the clear interruption in the milkflow as is the case with the device according to the invention.

It will be clear that said milk flow indicator may be inserted into the handgrip according to Figure 6, in which case the legs 47, 48 of the tubular piece then would form the legs 36, 37 of the handgrip.

**Claims**

1. An apparatus for removing a milking set (8) from a cow and connectable with different positions of a milk conduit (4) and a main vacuum conduit (5) of a milking machine in a cow-shed, said apparatus comprising a substantially vertically suspended cylinder (11) with piston (13), the milking set (8) being connected to the upper side of the piston (13) by a lifting cord (14′), the space (21) in the cylinder (11) below the piston (13) being connectable through a vacuum supply conduit (10, 23, 25, 26, 29) of the apparatus to the main vacuum conduit (5) through a vacuum valve (not shown) which is actuatable by an electronic control device (not shown) received in a closed cylinder portion (17), the lifting cord (14′) leaving the upper end (18) of the cylinder (11) and further extending downwardly along a guide element (16), characterized in that the vacuum supply conduit (10, 23, 25, 26, 29) extends within the cylinder from the top to adjacent the bottom of the cylinder (11) and is connected past the upper inside space of the cylinder into communication with the space (21) below the piston.

2. Apparatus according to claim 1, characterized in that the vacuum supply conduit comprises a vacuum tube (23) which extends from the top of the cylinder (11) sealingly through the piston (13) to adjacent the bottom (24) of the cylinder space (21) below the piston.

3. Apparatus according to claim 1, characterized in that the supply conduit extends from the top of the cylinder (11) as a resilient spiralized tube (25) to the lower end of the piston (13) where it communicates with the cylinder space (21) below the piston through an aperture in the piston bottom.

4. Apparatus according to claim 1, characterized in that the vacuum supply conduit comprises a vacuum space (22) around an inner sleeve (27) provided in the cylinder (11), said sleeve communicating with the cylinder space (21) below the piston through an aperture (28) in said inner sleeve (27) adjacent the bottom (24) of said cylinder space (21).

5. Apparatus according to one or more of the preceding claims, characterized in that the closed cylinder portion (17) having the electronic control device and the vacuum valve, is provided below the bottom (30) of the cylinder space (21) situated below the piston.

6. Apparatus according to one or more of the preceding claims, a movable handgrip having perpendicular legs being secured to the upper end of the cylinder, said handgrip having connecting means for connecting it to the milk conduit and the vacuum conduit, such that a milk passage extends through the perpendicular legs of the handgrip, the milkhose of the milking set being connectable to the end of said passage, a milkflow indicator being provided in the handgrip, characterized in that the milkflow indicator is a part (40) received in a corresponding aperture in the handgrip (6) which opens into the milk passage, said piece comprising two electrodes (41) projecting into the milk passage, said electrodes being electrically connected on the exterior of the piece by wires (42, 43) to the electronic control device in the cylinder of the apparatus.

7. Apparatus according to claim 6, provided with a milk flow indicator, characterized in that the milkflow indicator comprises a tubular piece (46) manufactured from electrically insulating material, having relatively angled legs, an electrically conductive metal tube (49, 50) being provided interiorly of each of the legs (47, 48) of the tubular piece, the wires (42, 43) or similar conductive elements being connectable to said metal tubes.

**Patentansprüche**

1. Vorrichtung zum Entfernen eines Melkzeuges (8) von einer Kuh, welche Vorrichtung mit verschiedenen Punkten einer Milchleitung (4) und einer Hauptvakuumleitung (5) einer Melkmachine in einem Kuhstall verbindbar ist und besteht aus einem hauptsächlich vertikal aufgehängten Zylinder (11) mit Kolben (13), wobei das Melkzeug (8) mit der Oberseite des Kolbens (13) mittels einer Hebeschnur (14') verbunden ist und der Raum (21) im Zylinder (11) unterhalb des Kolbens (13) mittels einer Vakuumzufuhrleitung (10, 23, 25, 26, 29) der Vorrichtung mit der Hauptvakuumleitung (5) mit einem (nicht dargestellten) Vakuumventil verbindbar ist, welches Ventil von einer (nicht dargestellten) elektronischen Steuereinheit bedienbar ist, welche in einem geschlossenen Zylinderteil (17) aufgenommen ist, welche Hebeschnur (14') das Oberende (18) des Zylinders (11) verlässt und weiter nach Unten verläuft über ein Führungselement (16), dadurch gekennzeichnet, dass die Vakuumfuhrleitung (10, 23, 25, 26, 29) innerhalb des Zylinders vom Oberende zu in der Nähe des Bodens des Zylinders (11) verläuft und am oberen Innenraum des Zylinders vorbei mit dem Raum (21) unterhalb des Kolbens in Verbindung steht.

2. Vorrichtung nach Anspruch 1, dadurch gekennzeichnet, dass die Vakuumzufuhrleitung ein Vakuumrohr (23) enthält, welches vom oberen Ende des Zylinders (11) abgedichtet durch den Kolben (13) hindurch zu in der Nähe des Bodens (24) des Zylinderraums (21) unterhalb des Kolbens verläuft.

3. Vorrichtung nach Einspruch 1, dadurch gekennzeichnet, dass die Vakuumzufuhrleitung vom oberen Ende des Zylinders (11) wie ein elastisches schraubenförmiges Rohr (25) zum unteren Ende des Kolbens (13) verläuft, wo dieses Rohr mit dem Zylinderraum (21) unterhalb des Kolbens über eine Öffnung im Kolbenboden in Verbindung steht.

4. Vorrichtung nach Einspruch 1, dadurch gekennzeichnet, dass die Vakuumfuhrleitung einen Vakuumraum (22) um eine innere Büchse (27) herum enthält, welche Büchse im Zylinder (11) vorgesehen ist und mit dem Zylinderraum (21) unterhalb des Kolbens in Verbindung steht über eine Öffnung (21) in dieser inneren Büchse (27), in der Nähe des Bodens (24) des Zylinderraums (21).

5. Vorrichtung nach einem oder mehreren der vorangehenden Ansprüche, dadurch gekennzeichnet, dass der geschlossene Zylinderteil (17), welcher die elektronische Steuereinheit und das Vakuumventil enthält, unterhalb des Bodens (30) des unterhalb des Kolbens liegenden Zylinderraums (21) angeordnet ist.

6. Vorrichtung nach einem oder mehreren der vorangehenden Ansprüche, bei welcher ein bewegbarer Handgriff mit untereinander senkrechten Schenkeln am oberen Zylinderende befestigt ist, welcher Handgriff Verbindungsmittel aufweist zum Verbinden desselben mit der Milchleitung und mit der Vakuumleitung derart, dass ein Milchkanal durch die senkrechten Schenkel des Handgriffs verläuft, wobei der Milchschlauch

# 0 097 395

des Melkzeuges mit dem Ende dieses Kanals verbindbar ist und ein Milchstromindikator im Handgriff vorgesehen ist, dadurch gekennzeichnet, dass der Milchstromindikator ein in einer entsprechenden Öffnung im Handgriff (6) aufgenommener Teil (40) ist, welche Öffnung in den Milchkanal mündet, welcher Teil aus zwei Elektroden (41) besteht, welche in das Milchkanal vorragen und elektrisch an der Aussenteilen des Teils mittels Drähtes (42, 43) mit der elektronischen Steuereinheit im Zylinder der Vorrichtung verbunden sind.

7. Vorrichtung nach Anspruch 6, versehen mit einem Milchstromindikator, dadurch gekennzeichnet, dass der Milchstromindikator ein von elektrisch isolierendem Material gefertigter Rohrteil (46) ist, welcher abgewinkelte Schenkel aufweist, während ein elektrisch leitendes Metallrohr (49, 50) innerhalb von jedem der Schenkel (47, 48) des Rohrteils vorgesehen ist und die Drähte (42, 43) oder ähnliche leitende Elemente mit diesen Metallrohren verbindbar sind.

**Revendications**

1. Un dispositif séparateur de faisceau pour faisceau de traite (8) d'une vache et reliable à des points divers d'une conduite (4) de lait et d'une conduite (5) principale de vide d'une machine à traire dans une étable, ledit séparateur comprenant un cylindre (11) avec piston (13) suspendu substantiellement vertical, le faisceau de traite (8) étant relié au côté supérieur du piston (13) au moyen d'une corde de levage (14'), l'espace (21) dans le cylindre (11) en dessous du piston (13) étant réliable par un tuyau d'admission de vide (10, 23, 25, 26, 29) du dispositif à la conduite (5) principale de vide à une valve à vide (non représentée) étant activable par une unité de contrôle électronique (non représentée) reçue dans une partie (17) fermée du cylindre, la corde (14') de levage partant par l'extrémité supérieure (18) du cylindre (11) et ensuite s'étendant en bas sur un élément (16) de guidage, caractérisé en ce que la conduite d'admission de vide (10, 23, 25, 26, 29) s'étend à l'intérieur du cylindre du côté supérieur vers près du fond du cylindre (11) et est reliée au delà de l'espace intérieure supérieure du cylindre en communication avec l'espace (21) en dessous du piston.

2. Dispositif selon la revendication 1, caractérisé en ce que la conduite d'admission de vide comprend un tuyau (23) de vide s'étendant du côté supérieur du cylindre (11) de façon étanche à travers du piston (13) vers près du fond (24) de l'espace (21) du cylindre en dessous du piston.

3. Dispositif selon la revendication 1, caractérisé en ce que la conduite d'admission de vide s'étend du côté supérieur du cylindre (11) comme un tube (25) élastique hélicoidal vers l'extrémité inférieur du piston (13) où ledit tube est un communication avec l'espace (21) du cylindre en dessous du piston via une ouverture dans le fond du piston.

4. Dispositif selon la revendication 1, caractérisé en ce que la conduite d'admission de vide est constituée par une espace de vide (22) autour d'un tube intérieur (27) prévu dans le cylindre (11), ledit tube étant en communication avec l'espace (21) du cylindre en dessous du piston par une ouverture (28) dans ledit tube (27) intérieur près du fond (27) de ladite espace (21) de cylindre.

5. Dispositif selon une ou plusieurs des revendications précédentes, caractérisé en ce que la partie fermée (17) du cylindre reçevant l'unité de contrôle électronique et la valve à vide est prévue en dessus du fond (30) de l'espace (21) de cylindre située en dessous du piston.

6. Dispositif selon une ou plusieurs des revendications précédentes, avec une poignée mobile à des branches perpendiculaires l'un à l'autre étant connectée à l'extrémité supérieure du cylindre, ladite poignés ayant des éléments de connexion pour rélier la poignée avec la conduite de lait et à la conduite de vide, de sorte qu'un canal à lait s'étend dans les branches perpendiculaires de la poignée le tube à lait du faisceau de traite étant reliable à l'extrémité dudit canal, un indicateur de débit de lait étant prévu dans la poignée, caractérisé en ce que l'indicateur de débit est une piece (40) reçue dans une ouverture correspondante dans la poignée (6), ladite ouverture s'ouvrant dans le canal à lait, ladite pièce comprenant des électrodes (41) en saillie dans le canal à lait, lesdites électrodes étant electriquement reliées à l'extérieur de la pièce au moyen de fils (42, 43) métalliques à l'unité de contrôle electronique dans le cylindre du dispositif.

7. Dispositif selon la revendication 6, pourvu d'un indicateur de débit de lait, caractérisé en ce que l'indicateur de débit de lait comprend une pièce (46) tubulaire fabriquée d'un matériel électriquement isolant, avec des branches mutuellement faisant angle, un tube métallique (49, 50) électriquement conducteur étant prévu à l'intérieur de chacune des branches (47, 48) de la pièce tubulaire, les fils (42, 43) ou éléments conducteurs similaires étant réliables audits tubes métalliques.

6

FIG. 1

0 097 395

FIG. 2          FIG. 3

FIG. 4

FIG. 5

FIG. 6

FIG. 7